# EUROPÄISCHE PATENTSCHRIFT

(11) **EP 3 837 081 B1**
(45) Veröffentlichungstag und Bekanntmachung des Hinweises auf die Patenterteilung: **06.11.2024**
(21) Anmeldenummer: 19756101.2
(22) Anmeldetag: 31.07.2019
(51) Int. Cl.: B23K 23/00, E01B 11/44, B23K 101/06

(54) **VERFAHREN ZUM ABDICHTEN EINER GIESSFORM FÜR ALUMINOTHERMISCHE SCHIENENSCHWEISSUNGEN**
METHOD FOR SEALING A CASTING MOULD FOR ALUMINOTHERMIC RAIL WELDINGS
PROCÉDÉ PERMETTANT D'ÉTANCHÉIFIER UN MOULE DE COULÉE DESTINÉ À DES SOUDURES DE RAILS PAR ALUMINOTHERMIE

(30) Priorität: 15.08.2018 DE 102018006415
(43) Veröffentlichungstag der Anmeldung: 23.06.2021
(73) Patentinhaber: Goldschmidt Holding GmbH, 04349 Saxony Leipzig (DE)
(72) Erfinder: HANTUSCH, Jan, 04416 Markkleeber (DE); ANGENENDT, Werner, 42279 Wuppertal (DE); HEINIG, Sophia, 04329 Leipzig (DE); REINICKE, Thomas, 06198 Salzatal / OT Lieskau (DE); MECKL, Daniel, 06179 Teutschental / OT Zscherben (DE)
(86) Internationale Anmeldenummer: PCT/EP2019/000233
(87) Internationale Veröffentlichungsnummer: WO 2020/035164

(56) Entgegenhaltungen:
- EP-A1- 0 444 480
- FR-A1- 2 323 488

## Beschreibung

Die Erfindung bezieht sich auf Verfahren zur Abdichtung des Gießraumes von Gießformen zur Durchführung aluminothermischer Schienenverbindungsschwei-ßungen sowie auf Verfahren zur Abdichtung des Gießraumes von Gießformen zur Durchführung aluminothermischer Reparaturschweißungen.

Eine aluminothermische Schweißverbindung besteht aus einem, eine Schweißfuge zwischen den Stirnseiten der zu verbindenden Schienenenden ausfüllenden Zwischengussgefüge, welches als Reaktionsprodukt des aluminothermischen feinkörnigen Gemisches aus Eisenoxid und Aluminium anfällt, dem bestimmte Legierungselemente zur Beeinflussung der Härte sowie weitere Reaktanden zur Dämpfung der Reaktion beigegeben sein können.

Die Verschweißung der Schienenenden wird regelmäßig unter Vorwärmung durch-geführt, um homogene Oberflächentemperaturen der Innenwandungen des Giessraumes darzustellen und eventuell vorhandene Feuchtigkeit auszutreiben. Durch die Oberflächentemperaturen werden die Abkühlgeschwindigkeit des schmelzflüssigen Stahls und damit die Gießzeit sowie die Gießgeschwindigkeit beeinflusst, wobei sich jedoch in Abhängigkeit von den unterschiedlichen Wärmeleitfähigkeiten der Innenwandungen der Gießform sowie der Stirnseiten der Schienenenden unvermeidbar Temperaturabweichungen einstellen.

Eine solche Gießform ist beispielsweise aus dem EP 0 925 866 B1 bekannt und besteht aus zwei Formhälften, die beiderseits der herzustellenden Schienenverbindung aufgestellt werden, hierbei die Schweißfuge symmetrisch überdeckend. Die Schweißfuge bildet mit den Stirnseiten der zu verbindenden Schienenenden sowie den Innenwandungen der Formhälften einen Gießraum, der in seinem Kernbereich das Schienenprofil nachbildet und in den das Reaktionsprodukt der aluminothermischen Reaktion, nämlich schmelzflüssiger Stahl oberseitig eingegossen wird.

Die beiden Formhälften bilden Grenzflächen nicht nur in einer Teilungsebene der Gießform, sondern auch auf den Oberflächen der aluminothermisch zu verschweißenden Schienenenden, zwischen denen sich somit Spalte befinden, die zur Vermeidung eines unkontrollierten Austritts von schmelzflüssigem Stahl einer Abdichtung bedürfen. Diese Abdichtung muss derart beschaffen sein, dass sie gegenüber den Temperaturen der Stahlschmelze während eines Eingießprozesses beständig ist.

Es ist bekannt, zur Abdichtung der genannten Spalte einen sogenannten Abschmiersand zu benutzen, der bei Arbeiten im verlegten Gleis in der Form von jeweils 25 kg aufnehmenden Säcken mitgeführt werden muss. Dieser Abschmiersand muss bei jeder Schweißstelle manuell von der Außenseite der Gießform her aufgetragen werden und hierbei die Spalte schließen, welches mit einem nicht unbeträchtlichen Zeitaufwand verbunden ist. Auch ist diese Art der Abdichtung nicht frei von Wechselwirkungen mit der Stahlschmelze, da es an den Stellen, an denen der Abschmierr r sand in Berührung mit der Schmelze tritt, zu Sandeinbränden kommen kann, deren nachträgliche Beseitigung durch Schleifen sich schwierig gestalten kann. Der Abschmiersand enthält ferner regelmäßig Feuchtigkeit, so dass sich unter Wärmeeinfluss Dampfblasen bilden können, welche Schweißfehler wie "wormhotes" zur Folge haben können.

Aus der CH 658 817 A5 sind ein Verfahren und eine Vorrichtung zum aluminothermischen Schweissen bekannt, bei denen eine Gießform aus zwei Formhälften besteht, die auf ihren Berührungsflächen mit Dichtungsstoffen versehen sind, wobei die Formhälften mit einer Pressvorrichtung, die fest angezogen wird, dicht verschlossen werden.

Das Problem der Abdichtung des Gießraumes stellt sich außer bei Schienenverbindungsschweißungen gleichermaßen bei Schienenkopfreparatur- bzw. Auftragsschweißungen und sonstigen Schweißungen, die aluminothermisch durchgeführt werden.

Aus der FR 2 323 488 A1, welche die Grundlage für den Oberbegriff der unabhängigen Ansprüche bildet, ist ein Verfahren zur Abdichtung des Giessraumes einer in einem aluminothermischen Schienenschweißverfahren einzusetzenden Gießform bekannt, die in der Form zweier beiderseits einander gegenüberstehender Formhälften zum Einsatz kommt. Die Formhälften sind auf ihren den jeweiligen Schienenenden zugekehrten ebenen Flächen mit Nuten versehen, die zur Aufnahme einer thermisch expandierfähigen Dichtungsmasse bestimmt sind. Nach Maßgabe von Spalten, die zwischen den genannten Flächen einerseits und den Schienenenden im Bereich der Nuten bestehen, kann die Dichtungsmasse nach Maßgabe der sich einstellenden Druckverhältnisse sowohl zur Außenseite als auch in den eigentlichen Giessraum hinein expandieren, hierbei den Schweißvorgang störend.

Aus der EP 0 444 480 A1 ist ein weiteres vergleichbares Verfahren zur Abdichtung eines Giessraumes einer in einem aluminothermischen Verfahren eingesetzten Gießform bekannt, deren Formhälften mit Ausnehmungen versehen sind, die dazu eingerichtet sind, eine Dichtungsmasse aufzunehmen, die den Spalt zwischen den der Formhälfte zugekehrten Oberfläche eines Schienenendes und der Formhälfte dichtend zu verschließen. Die in einem knetfähigen Zustand vorliegende Dichtungsmasse wird nach erfolgter Positionierung und Festlegung der Formhälften in die Ausnehmung eingebracht, wobei jedoch aufgrund der zur Außenseite hin offenen Ausgestaltung ein reproduzierbarer Druckaufbau nur eingeschränkt möglich ist.

Aus der WO 2014/106646 A1 ist ein Verfahren zur Herstellung eines Kern- und/oder Formsandes für Gießereizwecke bekannt es bekannt, wobei ein mineralischer Formgrundstoff mit einem Bindemittel bestehend aus Wasserglas und Blähgraphit benutzt werden. Mit dieser Bindemittelmischung soll ein Entkernen erleichtert und gleichzeitig die Oberflächenqualität des hergestellten Gusskörpers verbessert werden.

Diese bekannte Technik der Herstellung einer Dichtung der Gießform ist somit technisch als nicht optimal anzusehen, zeit- und arbeitsintensiv sowie in der praktischen Handhabung bei Arbeiten im verlegten Gleis mühsam, da massereiche Hilfsmittel mitgeführt werden müssen. Das hierbei erzielbare Arbeitsergebnis ist ferner von der Erfahrung sowie der Sorgfalt des jeweiligen Schweißers abhängig.

Es ist die Aufgabe der Erfindung, Verfahren der eingangs genannten Art mit Hinblick auf eine einfachere Darstellung einer Abdichtung des Giessraumes hin auszugestalten. Gelöst ist diese Aufgabe bei solchen Verfahren durch die Merkmale der Ansprüche 1 oder 2.

Wesentlich ist die Benutzung einer mineralischen bzw. kohlenstoffhaltigen feuerfesten, durch thermische oder chemische Initiierung expandierfähigen Dichtungsmasse anstelle des bisher eingesetzten Abschmiersandes. Dem liegt die Vorstellung zugrunde, diese Masse in einem Spalt zu positionieren, der auf der einen Seite durch Oberflächen des Schienenkörpers oder der sonstigen zweier zu verschweißender Werkstücke und auf der anderen Seite durch Wandungabschnitte der Formhälften begrenzt wird. Durch eine thermisch oder chemisch initiierte Expansion der Dichtungsmasse wird diese den Spalt ausfüllen, in diesem unter Druck stehen und auf diese Weise einen den Spalt zuverlässig dichtenden Verschluss bilden. Bei einer thermisch initiierten Expansion wird eine eingelagerte oder chemisch gebundene Flüssigkeit infolge der Wärmezufuhr verdampft, wobei es aufgrund der hiermit einhergehenden Volumenvergrößerung zu einer Expansion der Masse kommt. Beispielsweise können in diesem Zusammenhang Hydrate, Carbonate oder Nitrate benutzt werden, welche Wasserstoff, Kohlendioxid oder Stickstoff freisetzen. Bei einer chemisch initiierten Expansion führt eine chemische Reaktion zur Freisetzung eines Gases oder eines Dampfes, der eine Expansion der Masse bewirkt. Da die Dichtungsmasse somit expandierfähig ist, ergibt sich der Vorteil, dass bei Arbeiten im verlegten Gleis im Vergleich zu der zu diesem Zweck bekannten Nutzung von Abschmiersand wesentlich geringere Massen mitgeführt werden müssen. Nachdem diese Dichtungsmassen nach sachgerechter Anbringung ihre eigentliche Dichtwirkung infolge der Expansion entwickeln, mindert sich die mit der Einrichtung einer Abdichtung der Gießform erforderliche Sorgfalt gleichermaßen wie der hiermit verbundene Zeit- und Arbeitsaufwand. Nachdem sich der Vorgang des Anbringens der Dichtungsmasse vereinfacht, ergibt sich eine geringere Abhängigkeit von der Sorgfalt und der Erfahrung des diese Arbeiten verrichtenden Schweißers. Ein weiterer Vorteil ist darin zu sehen, dass das ansonsten bei einer Verwendung von Abschmiersand nicht auszuschließende Risiko eines Feuchtigkeitseintrags in den Gießraum der Gießform entfällt.

Eine expandierfähige, zur Abdichtung bestimmte Masse kann analog der Verwendung des bisher zu diesem Zweck bekannten Abschmiersandes auch außenseitig der Gießform, das heißt neben einem eigentlichen Schweißwulst, diesen nicht kontaktierend eingesetzt werden. Auch in diesem Fall wird ein Spalt zwischen dem Schienenkörper und den diesem zugekehrten Flächen der Gießform dichtend geschlossen. Die mit der Benutzung einer solchen Masse als Dichtungsmasse vebundenen Vorteile sind auch in diesem Fall gegeben.

Die Einsatzgebiete einer erfindungsgemäß ausgerüsteten Gießform betreffen eine Schienenverbindungsschweißung oder eine Reparaturschweißung. Letztere betrifft im Regelfall eine Reparatur von verschleißbedingten Abnutzungen des Schienenkopfes, insbesondere Schienenfehler wie Squats, Belgraspis, Eindrückungen, Ausbrüche und Schleuderstellen. Bei derartigen Reparaturschweißungen wird zunächst das schadhafte Teil des Schienenkopfes entfernt und anschließend die so entstandene Ausnehmung durch eine Auftragsschweißung ausgefüllt. Angestrebt wird hierbei ein über die Schweißstelle hinweg stetiger Verlauf der wesentlichen Eigenschaften des Schienenkörpers. Neben einer Schienenverbindungsschweißung kann die Erfindung auch bei der Verschweißung anderer Werkstücke benutzt werden, wo immer eine aluminothermische Schweißung zur Anwendung kommt.

Die Dichtungsmasse kann unmittelbar in Nuten der Formhälften eingesetzt sein und in diesem Zustand an dem Schweißort bereit gestellt werden. Dies bedeutet, dass die Formhälften und die Dichtungsmasse einstückig an ihren Einsatzort verbracht werden können. Die Dichtungsmasse kann jedoch auch erst an dem jeweiligen Einsatzort in Nuten der Formhälften eingebracht werden. Dies bedeutet, dass Formhälften und Dichtungsmasse getrennt voneinander zu ihrem Einsatzort verbracht werden.

Zur Initiierung der Expansion der Dichtungsmasse können Massen benutzt werden, die exotherm reaktionsfähig sind, so dass eine solche Reaktion mittels eines Zündstäbchens auslösbar ist, womit der Expansionsprozess in Gang gesetzt wird. Die Expansion kann jedoch auch unmittelbar durch eine Vorwärmung der Gießform ausgelöst werden. In jedem Fall geht es hierbei um ein ausreichendes Einbringen von Wärme in die Dichtungsmasse, so dass sich noch andere, dem Fachmann geläufige Techniken anbieten.

Die Gießform ist an den Expansionsprozess der Dichtungsmasse angepasst. Es kommt hierbei darauf an, zu verhindern, dass diese in einer Nut aufgenommene Masse in Richtung auf den Gießraum hin expandiert. Gleichzeitig muss in der Nut, die in einen Wandungsabschnitt der Gießform eingearbeitet ist, bedingt durch den Expansionsprozess, ein solcher Druck entwickelt werden, der ausreichend ist, um eine zuverlässige Dichtungswirkung in einem Spalt zwischen dem Schienenkörper und den diesem gegenüberliegenden Wandungsabschnitten der Gießform zu entwickeln. Dies kann beispielsweise durch unterschiedliche innen- und außenseitige Spaltbreiten erreicht werden, so dass dementsprechend unterschiedliche Abströmwiderstände für die expandierende Dichtungsmasse dargestellt werden und ein Abströmen zur Innenseite hin jedenfalls zumindest stark behindert wird.

Nach den Merkmalen des Anspruchs 4 kommt die Dichtungsmasse, z. B. Blähgraphit als Formkörper zum Einsatz, wobei sich eine Herstellung über ein Strangppressverfahren anbietet.

Nach den Merkmalen der Ansprüche 5 bis 7 kommt die Dichtungsmasse in der Form eines Bandes, insbesondere eines selbstklebenden Bandes zum Einsatz. Dies bringt den Vorteil einer flexiblen Montage an Konturen der Formhälften bzw. des Schienenkörpers mit sich. Bei entsprechenden konstruktiven Vorkehrungen an den Formhälften, beispielsweise in der Form von Nuten besteht die Möglichkeit, das Band in diesen Nuten formschlüssig zu fixieren.

Gemäß den Merkmalen der Ansprüche 8 bis 10 kommt die Dichtungsmasse in der Form einer pastösen Masse zum Einsatz, die an ihrem Einsatzort durch Spritzen raupenförmig aufgetragen wird oder in eine Nut der jeweiligen Formhälfte eingespritzt wird. Die Dichtungsmasse kann in diesem Fall in einer Kartusche zum Einsatzort gebracht werden.

Gemäß den Merkmalen des Anspruchs 11 wird Blähgraphit in der Form eines rieselfähigen Granulates benutzt, welches in dieser Form anderen mineralischen feuerfesten Stoffen beigemischt wird, um deren Eigenschaften zu modifizieren. Ein in dieser Weise zusammengestelltes Stoffgemisch kann dann als expansionsfähige Dichtungsmasse benutzt werden.

Gemäß den Merkmalen des Anspruchs 12 wird als expandierfähige Dichtungsmasse eine intumescente Masse oder eine solche Masse benutzt, die zumindest intumescente Anteile enthält. Bei dieser intumescenten Masse handelt es sich um Blähgraphit. Die durch Temperaturerhöhung auslösbare Expansion von Blähgraphit ist bekannt und wird jedoch bisher nur als Flammschutz, nämlich zur Verhinderung einer Brandausbreitung, in der Metallurgie als Oxidationsschutz und in der chemischen Industrie in Verbindung mit Lacken und Farben benutzt. Blähgraphit erfüllt alle Anforderungen, die an eine Dichtungsmasse zu stellen sind, die bei einer Gießform für alumino-thermische Schweißverfahren erfüllt sein müssen. Als eine weitere mineralische Masse kommt in diesem Zusammenhang Vermiculit infrage, ein mineralischer, insbesondere silikatischer Werkstoff, aus dem durch Wärmezufuhr Wasserdampf freigesetzt wird, der zu einer Expansion führt. Blähgraphit kann in diesem Zusammenhang alleine oder in Verbindung mit anderen mineralischen Stoffen eingesetzt werden.

Die Merkmale des Anspruchs 13 sind auf eine besondere Art der Benutzung der expandierfähigen Dichtungsmasse gerichtet. Diese entwickelt hierbei eine Dichtwirkung unter unmittelbarer Kontaktierung eines Schweißwulstes.

Man erkennt, dass mit dem erfindungsgemäßen Verfahren die einfache und rasche Bereitstellung einer Dichtung des Gießraumes einer in einem aluminothermischen Verfahren einzusetzenden Gießform möglich ist, und zwar mit einem geringeren Arbeitsaufwand als bei dem, dem Stand der Technik zuzuordnenden, eingangs vorgestellten Verfahren und in reproduzierbarer Weise unabhängig von der Erfahrung und der Sorgfalt des jeweiligen Schweißers.

Die Erfindung wird im Folgenden unter Bezugnahme auf die beiliegenden Zeichnungen näher erläutert werden. Es zeigen:
- Fig. 1: eine perspektivische Darstellung einer erfindungsgemäßen Gießform in teilweisem Schnitt;
- Fig. 2: eine ebene Schnittdarstellung einer Gießformhälfte gemäß Fig. 1 im Ausgangszustand;
- Fig. 3: eine ebene Schnittdarstellung einer Gießformhälfte gemäß Fig. 2 zum Zeitpunkt des Beginns einer Blähgraphitexpansion;
- Fig. 4: eine ebene Schnittdarstellung einer Gießformhälfte gemäß Fig. 2 zum Zeitpunkt des Beginns einer Blähgraphitexpansion während der Initiierung des Blähprozesses durch eine Vorwärmung;
- Fig. 5: eine ebene Schnittdarstellung einer Gießformhälfte gemäß Fig. 2 zum Zeitpunkt einer abgeschlossenen Blähgraphitexpansion;
- Fig. 6: eine ebene Schnittdarstellung einer für ein Auftragsreparaturschweißen im Schienenkopfbereich vorbereitete Gießform;
- Fig. 7: eine ebene teilweise Schnittdarstellung eines bandförmigen Einsatzes von Blähgraphit als Dichtungsmittel bei einer Gießform.

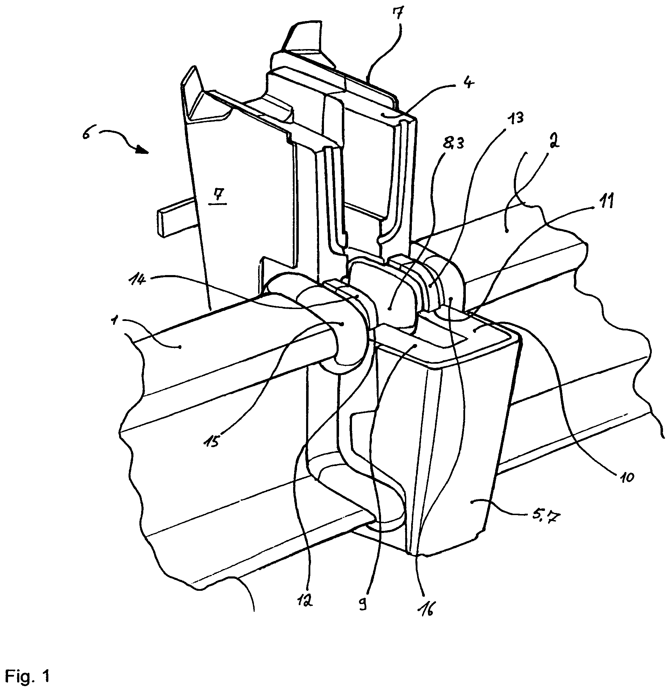

Fig. 1 zeigt zwei im Wege eines aluminothermischen Verfahrens zu verschweißende Schienenenden 1, 2, zwischen deren einander zugekehrten Stirnseiten eine Schweißfuge 3 besteht. Mit 4, 5 sind zwei untereinander gleiche Formhälften einer Gießform 6 bezeichnet, die aus dem üblichen feuerfesten Werkstoff bestehen und außenseitig teilweise in eine metallische Umhüllung 7, ein Halteblech eingefasst sind.

Die Formhälften 4, 5, von denen die Letztgenannte nur unvollkommen dargestellt ist, liegen im zusammengesetzten Zustand der Gießform 6 in einer vertikalen Teilungsebene aneinander und umgeben - in Längsrichtung der Schienenenden 1, 2 gesehen - die Schweißfuge 3 beidseitig, hierbei einen Gießraum 8 bildend, der durch die Stirnseiten der Schienenenden 1, 2 und im übrigen seitlich und unterseitig durch Wandungsabschnitte der Formhälften 4, 5 begrenzt wird.

Die beiden Formhälften 4, 5 werden zur Durchführung einer Schweißung mit zeichnerisch nicht dargestellten Mitteln aneinander fixiert. In einem zeichnerisch ebenfalls nicht dargestellten, auf die Gießform 6 aufgesetzten Schmelztiegel findet die aluminothermische Reaktion statt, als deren eines Reaktionsprodukt schließlich schmelzflüssiger Stahl anfällt, der in die oberseitig offene Gießform eingeführt wird.

Beide Formhälften 4, 5 weisen auf ihren, an den Schienenenden 1, 2 anliegenden Wandungsabschnitten 9, 10 Nuten 11, 12 auf, in die jeweils ein Band 13, 14 eingelegt ist, welches aus einer thermisch expandierfähigen Substanz, z. B. Blähgraphit besteht. Fig. 1 zeigt das jeweilige Band 13, 14 nach erfolgter Expansion, welche zur Außenseite, somit von dem Gießraum 8 fort erfolgt. Um diesen Sachverhalt sicher zu stellen, sind Spalte zwischen den Wandungsabschnitten 9, 10 und den Schienenenden 1, 2 auf den Innenseiten, das heißt den dem Gießraum 8 zugekehrten Seiten kleiner als diejenigen auf den Außenseiten ausgebildet, so dass sich zur Innenseite im Vergleich zur Außenseite hin ein wesentlich größerer Durchströmungswiderstand ergibt. Die Expansion der Bänder 13, 14 führt zur Ausbildung von Wulsten 15, 16 auf den Außenseiten der Wandungsabschnitte 9, 10, wobei es in dem Raum zwischen den Schienenenden 1, 2 und den Nuten 11, 12 infolge der Expansion, begünstigt durch eine Drosselwirkung beim Strömen der expandierfähigen Substanz zu einer Verdichtung sowie Ausbildung einer zuverlässigen Di^htwirkung durch diese Substanz kommt.

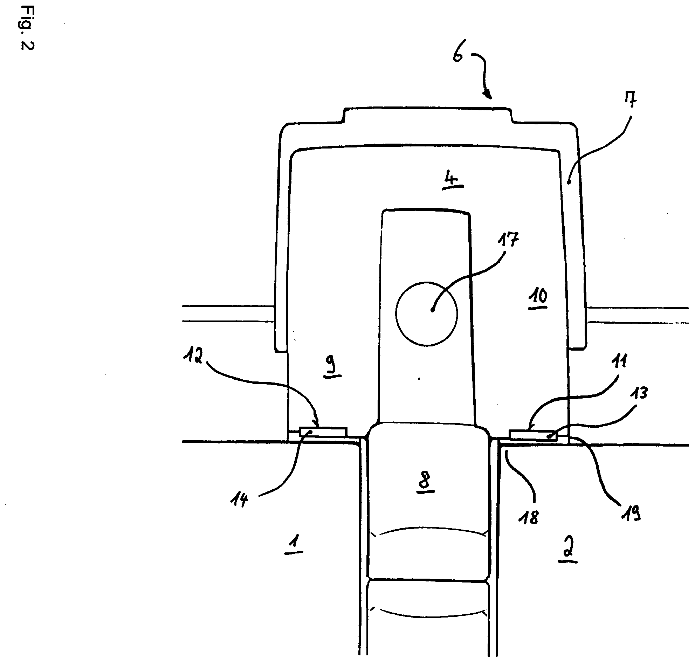

In den Figuren 2 bis 5 sind Funktionselemente, die mit denjenigen der Fig. 1 übereinstimmen, entsprechend beziffert, so dass auf eine diesbezügliche wiederholte Beschreibung verzichtet werden kann.

Figur 2 zeigt die Gießform 6 in einem Zustand kurz vor dem Eingießen schmelzflüssigen Stahls, wobei mit 17 die Einmündung eines im Übrigen zeichnerisch nicht dargestellten Seitensteigers bezeichnet ist. Man erkennt, dass die Spaltbreiten 18 zwischen den Wandungsabschnitten 9, 10 und den Schienenenden 1, 2 zur Innenseite hin, nämlich auf der dem Gießraum 8 zugekehrten Seite deutlich kleiner bemessen sind als die Spaltbreiten 19 auf der jeweiligen Außenseite. Auf diese Weise ist eine deutlich bevorzugte Expansionsrichtung der Bänder 13, 14 konstruktiv vorgegeben. Fig. 2 zeigt die Bänder 13, 14 in einem noch nicht expandierten Zustand.

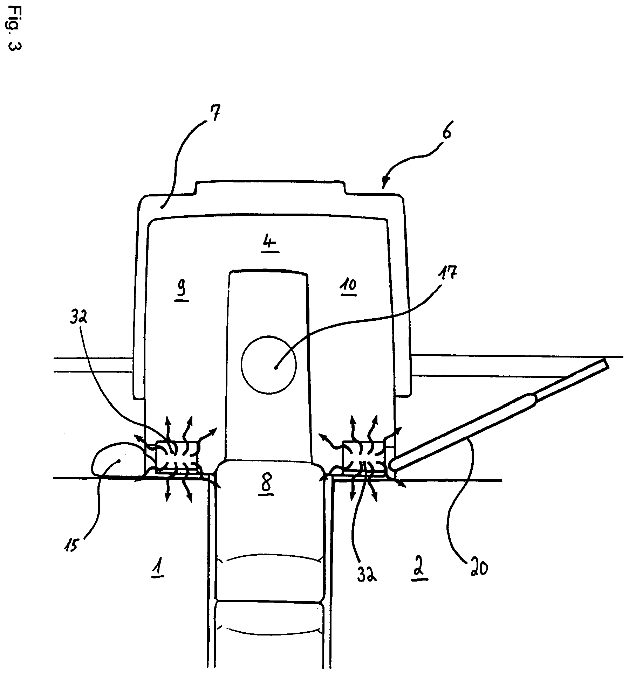

Fig 3 zeigt die Gießform 6 in einem Zustand, in dem die Expansion der Bänder 13, 14 manuell mittels einer pyrotechnischen Masse 32 oder einer exotherm reaktionsfähigen Masse mit einem Zündstab 20 initiiert worden ist. Die Wulste 15, 16 sind ausgebildet und eine Dichtung über die Spaltbreiten 18, 19 ist eingerichtet. Nach Abschluß dieses Vorgangs kann der Einguß der Stahlschmelze erfolgen.

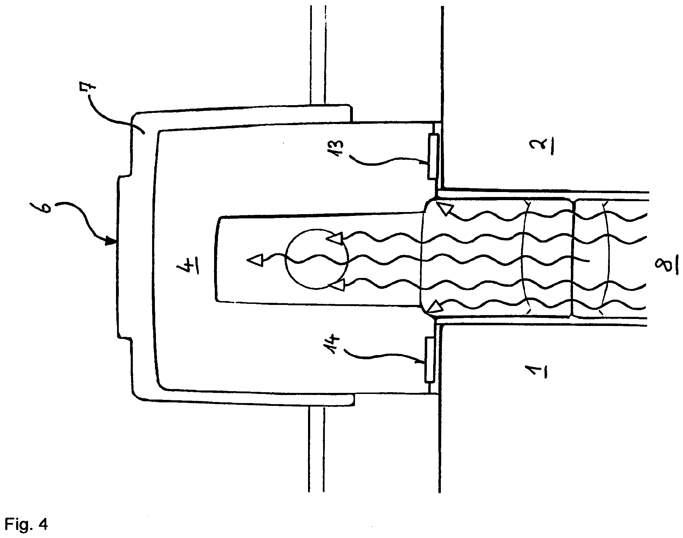

Fig. 4 zeigt die Gießform 6 in einem Zustand, in dem die Expansion der Bänder 13, 14 gerade beginnt. Sie wird thermisch initiiert durch die Vorwärmung des Gießraumes 8, welche in herkömmlicher Weise bewirkt wird, wobei die hierbei eingebrachte Wärme von der Innenseite des Gießraumes 8 her auf die Bänder einwirkt.

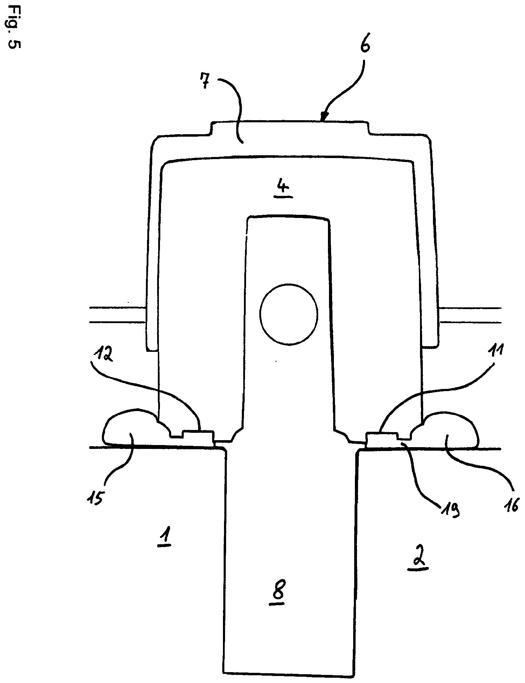

Fig. 5 zeigt die Gießform in einem Zustand, in dem die Expansion der Bänder 13, 14 abgeschlossen ist, so dass auf den Außenseiten der Gießform 6 Wulste 15, 16 gebildet worden sind und im Bereich der Spaltbreiten 18, 19 ein hinreichendes Dichtungsprofil entstanden ist.

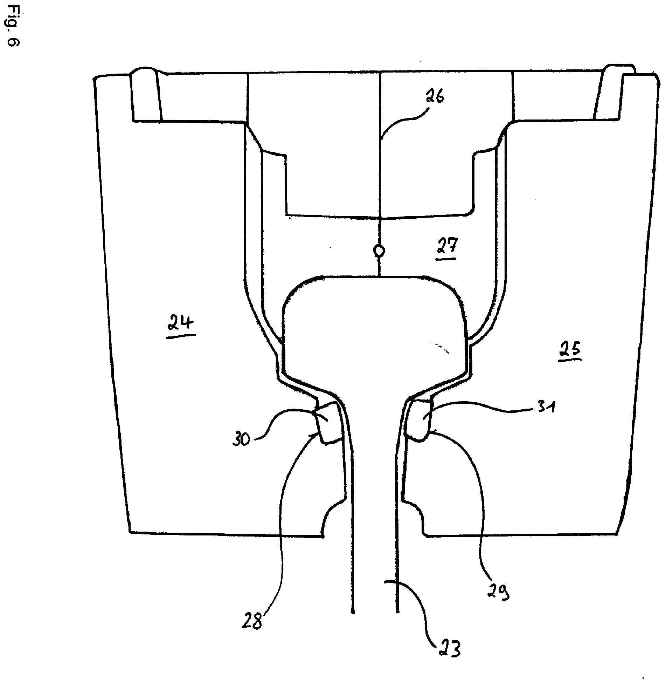

Fig. 6 zeigt eine Gießform 21, die für ein Reparaturauftragsschweißen auf dem Schienenkopf 22 eines Schienenprofils 23 eingerichtet ist. Die Gießform 21 besteht wiederum aus zwei Formhälften 24, 25, die beiderseits des Schienenprofils 23 in zeichnerisch nicht dargestellter Weise beispielsweise mittels eines Haltebleches fixiert sind und entlang einer vertikalen Teilungsebene 26 dichtend aneinanderliegen, hierbei einen oberseitig offenen Gießraum 27 darstellend.

Die Teilungsebene 26 verläuft in einer vertikalen Mittelebene des Schienenprofils 23, wobei beide Formhälften 24, 25 den Schienenkopf 22 untergreifen. Mit 28, 29 sind Nuten in den Formhälften bezeichnet, die sich unterhalb des Schienenkopfes 22 parallel zu einer Schienenlängsrichtung erstrecken und jeweils ein Band 30, 31 aufnehmen, welches stofflich wie die Bänder 13, 14 beschaffen ist.

Zur Vorbereitung einer Auftragsreparaturschweißung wird der schadhafte Bereich des Schienenkopfprofils durch schleifende und / oder in sonstiger Weise, z. B. mittels eines Schneidbrenners abtragende Bearbeitung entfernt und die Gießform 21 um die freigelegte Stelle des Schienenprofils 23 positioniert und fixiert.

Die Bänder 13, 14 sind dazu bestimmt, eine unterseitige Abdichtung des Gießraumes 27 einzurichten und es wird zur Vorbereitung eines Stahleingusses eine Expansion der Bänder 30, 31 eingeleitet, welche in gleicher Weise wie bei der Gießform 6 durchführbar ist. Wesentlich ist, dass nach Abschluss der Expansion die Unterseite des Gießraumes 27 eine Abdichtung erfahren hat. Ein vergleichbares Dichtungssystem kann im Bedarfsfall auch zwischen den Wandungsabschnitten der Gießform 21 und dem Schienenprofil in vertikaler Richtung vorgesehen sein.

In einem, auf die Gießform 21 aufgesetzten Reaktionstiegel wird in an sich bekannter Weise auf aluminothermischem Wege eine Stahlschmelze bereitgestellt, der gegebenenfalls nach Maßgabe des Werkstoffs der zu behandelnden Schienen Legierungselemente beigemischt sind. Der in den Gießraum eingefüllte Stahlguss füllt insbesondere die durch Abtrag entstandene Ausnehmung des Schienenkopfes 22 mit der Maßgabe aus, dass in diesem durch Auftragsschweißung behandelten Bereich, insbesondere in einer Fahrfläche metallurgische Eigenschaften, beispielsweise hinsichtlich Härte und Festigkeit dargestellt sind, die denjenigen des übrigen Fahrflächenverlaufs möglichst entsprechen, so dass infolge der Auftragsschweißung keine Unstetigkeit im Eigenschaftsverlauf entsteht.

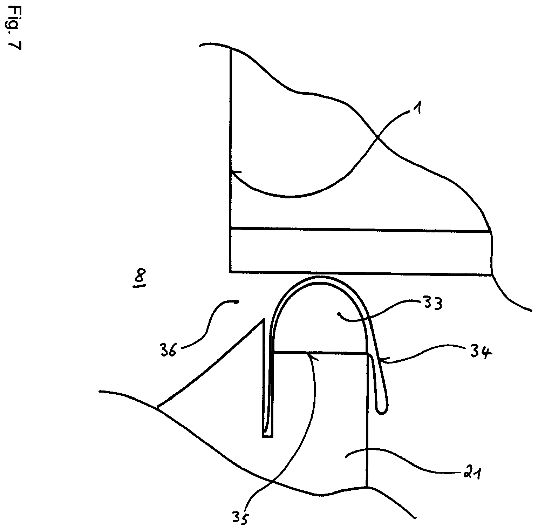

Die Anwendung des erfindungsgemäßen Verfahrens wurde vorstehend unter Bezugnahme auf eine zweiteilige, aus zwei Formhälften 4, 5 zusammengesetzte Gießform 6 vorgestellt. Eine Anwendung des Verfahrens ist jedoch nicht auf derartige Gießformen beschränkt und kann gleichermaßen bei dreiteiligen, z. B. aus einer den Schienenfuß stützenden Grundplatte und zwei seitlichen Formteilen zusammengesetzten Gießformen oder auch bei einer sonstigen mehrteiligen Gießform benutzt werden. Fig. 7 zeigt eine Anwendung der expandierfähigen Dichtungsmasse 33, z. B. Blähgraphit oder einer anderen Substanz in einem abzudichtenden Spalt 36 zwischen einer Unterseite des Schienenendes 1 und einem dieser zugekehrten Flächenabschnitt 35 der Gießform 21.

Die Dichtungsmasse 33 ist in einen schlauchförmigen Hüllkörper 34 eingebunden, der im Ausgangs- oder auch Anlieferungszustand mit dem Flächenabschnitt 35 verklebt sein kann. Der Hüllkörper 34 besteht aus einem feuerfesten Material, z. B. einem Gewebe, welches elastisch oder auch unelastisch sein kann.

Die Zeichnungsfigur 7 zeigt die Dichtungsmasse 33 in einem expandierten Zustand, in dem sich der Hüllkörper 34 unter dem Druck der Dichtungsmasse 33 fest an die genannte Unterseite des Schienenendes 1 sowie den Flächenabschnitt 35 anlegt, hierbei den Spalt 36 dichtend verschließend. Im Ausgangszustand, in dem die Dichtungsmasse noch nicht expandiert ist, liegt der Hüllkörper dementsprechend in einem entspannten Zustand vor.

Hinsichtlich einer Vorwärmung und einer Initiierung des Expansionsprozesses der Dichtungsmasse 33 gelten die vorstehenden Ausführungen analog.

**Bezugszeichenliste:**

| | | | |
|---|---|---|---|
| 1. | Schienenende | 10. | Wandungsabschnitt |
| 2 | Schienenende | 11. | Nut |
| 3. | Schweißfuge | 12. | Nut |
| 4 | Formhälfte | 13. | Rand |
| 5 | Formhälfte | 14. | Band |
| 6 | Gießform | 15. | Wulst |
| 7. | Umhüllung | 16. | Wulst |
| 8. | Gießraum | 17. | Seitensteiger |
| 9. | Wandungsabschnitt | 18. | Spaltbreite |
| 19. | Spaltbreite | | |
| 20. | Zündstab | | |
| 21. | Gießform | | |
| 22. | Schienenkopf | | |
| 23. | Schienenprofil | | |
| 24. | Formhälfte | | |
| 25. | Formhälfte | | |
| 26. | Teilungsebene | | |
| 27. | Gießraum | | |
| 28. | Nut | | |
| 29. | Nut | | |
| 30. | Band | | |
| 31. | Band | | |
| 32. | pyrotechnische Masse | | |
| 33. | Dichtungsmasse | | |
| 34. | Hüllkörper | | |
| 35. | Flächenabschnitt | | |
| 36. | Spalt | | |

## Patentansprüche

1. Verfahren zur Abdichtung des Gießraumes (8) einer Gießform (6) zur Durchführung aluminotherischer Schienenverbindungsschweißungen zwischen zwei Schienenenden (1, 2) mit zwei, eine oberseitig offene Gießform darstellende, das Schienenprofil im Bereich der Schweißung nachbildenden Formhälften (4, 5), wobei vorhandene Spalte zwischen den zugekehrten Oberflächen der Schienenenden (1, 2) und den diesen benachbarten Wandungsabschnitten (9, 10) der Gießform (6) mit einer feuerfesten Dichtungsmasse geschlossen werden, wobei in einem Reaktionstiegel eine Stahlschmelze bereit gestellt und in den Gießraum (8) zur Durchführung der als eine Schienenverbindungs-schweißung eingerichteten Schweißung eingebracht wird, wobei als Dichtungsmasse eine expandierfähige intumescente Masse verwendet wird, deren Expansion thermisch durch eine pyrotechnische, eine exotherm reaktionsfähige Masse oder durch ein Vorwärmen der Gießform (6) vor dem Einguß der Stahlschmelze initiiert wird, und wobei die Dichtungsmasse in Nuten (11, 12) der Formhälften (4, 5) aufgenommen ist, **dadurch gekennzeichnet,**
**dass** Spalte zwischen den Wandungsabschnitten 9, 10 und den Schienenenden 1, 2 auf den Innenseiten, das heißt den dem Gießraum (8) zugekehrten Seiten kleiner als diejenigen auf den Außenseiten ausgebildet werden, so dass sich zur Innenseite im Vergleich zur Außenseite hin ein wesentlich größerer Durchströmungswiderstand ergibt.

2. Verfahren zur Abdichtung des Gießraumes (27) einer Gießform (21) zur Durchführung aluminothermischer Reparaturschweißungen mit zwei eine oberseitig offene Gießform darstellende, ein Schienenprofil (23) im Bereich der Schweißung nachbildenden Formhälften (24, 25), wobei vorhandene Spalte zwischen den zugekehrten Oberflächen des Schienenprofils (23) und den diesen benachbarten Wandungsabschnitten der Gießform mit einer feuerfesten Dichtungsmasse geschlossen werden, wobei in einem Reaktionstiegel eine Stahlschmelze bereit gestellt und in den Gießraum (27) zur Durchführung der als eine Reparaturschweißung eingerichteten Schweißung eingebracht wird, wobei als Dichtungsmasse eine expandierfähige intumescente Masse verwendet wird, deren Expansion thermisch durch eine pyrotechnische, eine exotherm reaktionsfähige Masse oder durch ein Vorwärmen der Gießform (21) vor dem Einguß der Stahlschmelze initiiert wird, und wobei die Dichtungsmasse in Nuten (28, 29) der Formhälften (24, 25) aufgenommen ist, **dadurch gekennzeichnet,**
**dass** Spalte zwischen den Wandungsabschnitten der Gießform (21) und dem Schienenprofil (23) auf den Innenseiten, das heißt den dem Gießraum (27) zugekehrten Seiten kleiner als diejenigen auf den Außenseiten ausgebildet werden, so dass sich zur Innenseite im Vergleich zur Außenseite hin ein wesentlich größerer Durchströmungswiderstand ergibt.

3. Verfahren nach Anspruch 1 oder 2, **dadurch gekennzeichnet, dass** die Dichtungsmasse in Verbindung mit einem Zusammensetzen der Formhälften (4, 5; 24, 25) an der jeweiligen Schweißstelle in Nuten (11,12; 28, 29) der Formhälften eingebracht wird.

4. Verfahren nach Anspruch 1, 2 oder 3,_ **dadurch gekennzeichnet, dass** die expandierfähige Dichtungsmasse in der Form eines Formkörpers verwendet wird.

5. Verfahren nach Anspruch 1, 2 oder 3, **dadurch gekennzeichnet, dass** die expandierfähige Dichtungsmasse in der Form eines Bandes verwendet wird.

6. Verfahren nach Anspruch 5, **dadurch gekennzeichnet, dass** das Band in der Form eines klebefähigen, insbesondere eines selbstklebenden Bandes verwendet wird.

7. Verfahren nach Anspruch 5 oder 6, **dadurch gekennzeichnet, dass** das Band am Ort der Schweißstelle formschlüssig in Nuten (11,12; 28, 29) der Formhälften (4, 5; 24, 25) fixiert wird.

8. Verfahren nach Anspruch 1 oder 2, **dadurch gekennzeichnet, dass** die expandierfähige Dichtungsmasse in der Form einer pastösen Masse verwendet wird.

9. Verfahren nach Anspruch 8, **dadurch gekennzeichnet, dass** die pastöse Masse raupenförmig an ihrer Einsatzstelle aufgetragen wird.

10. Verfahren nach Anspruch 9, **dadurch gekennzeichnet, dass** die pastöse Masse am Ort der Schweißstelle in Nuten (11,12; 28, 29) der Formhälften (4, 5; 24, 25) eingespritzt wird.

11. Verfahren nach Anspruch 1 oder 2, **dadurch gekennzeichnet, dass** die expandierfähige Dichtungsmasse in der Form eines rieselfähigen Granulates verwendet wird.

12. Verfahren nach einem der Ansprüche 1 bis 11, **dadurch gekennzeichnet, dass** als expandierfähige Dichtungsmasse eine aus einer Kombination von Blähgraphit und anderen mineralischen feuerfesten Materialien bestehende Masse vewendet wird.

13. Verfahren nach einem der Ansprüche 1, 3 bis 6, 8, 9, 10, 11, **dadurch gekennzeichnet, dass** die expandierfähige Dichtungsmasse eine Schweißwulstgeometrie abbildend eingesetzt wird.

## Claims

1. Method for sealing the casting space (8) of a casting mould (6) in order to carry out aluminothermic rail-joint welding between two rail ends (1, 2) comprising two mould halves (4, 5) producing a casting mould which is open at the top and reproducing the rail profile in the region of the welding, gaps present between the facing surfaces of the rail ends (1, 2) and the wall portions (9, 10) adjacent thereto of the casting mould (6) being sealed with a refractory sealing compound, in a reaction crucible, a molten steel being provided and introduced into the casting space (8) in order to carry out the welding set up as rail-joint welding, an expandable intumescent substance being used as the sealing compound, the expansion of which is thermally initiated by a pyrotechnic substance, an exothermically reactive substance, or by preheating the casting mould (6) before pouring in the molten steel, and the sealing compound being received in grooves (11, 12) in the mould halves (4, 5),
**characterized in that**
gaps between the wall portions 9, 10 and the rail ends 1, 2 on the inner sides, that is to say the sides facing the casting space (8), are formed so as to be smaller than those on the outer sides so that there is much greater flow resistance towards the inside than towards the outside.

2. Method for sealing the casting space (27) of a casting mould (21) in order to carry out aluminothermic repair welding comprising two mould halves (24, 25) producing a casting mould which is open at the top and reproducing a rail profile (23) in the region of the welding, gaps present between the facing surfaces of the rail profile (23) and the wall portions adjacent thereto of the casting mould being sealed with a refractory sealing compound, in a reaction crucible, a molten steel being provided and introduced into the casting space (27) in order to carry out the welding set up as repair welding, an expandable intumescent substance being used as the sealing compound, the expansion of which is thermally initiated by a pyrotechnic substance, an exothermically reactive substance, or by preheating the casting mould (21) before pouring in the molten steel, and the sealing compound being received in grooves (28, 29) in the mould halves (24, 25),
**characterized in that**
gaps between the wall portions of the casting mould (21) and the rail profile (23) on the inner sides, that is to say the sides facing the casting space (27), are formed so as to be smaller than those on the outer sides so that there is much greater flow resistance towards the inside than towards the outside.

3. Method according to either Claim 1 or Claim 2, **characterized in that**, in conjunction with an assembly of the mould halves (4, 5; 24, 25) at each welding point, the sealing compound is introduced into grooves (11, 12; 28, 19) in the mould halves.

4. Method according to Claim 1, Claim 2 or Claim 3, **characterized in that** the expandable sealing compound is used in the form of a shaped body.

5. Method according to Claim 1, Claim 2 or Claim 3, **characterized in that** the expandable sealing compound is used in the form of a strip.

6. Method according to Claim 5, **characterized in that** the strip is used in the form of an adhesive, in particular self-adhesive strip.

7. Method according to either Claim 5 or Claim 6, **characterized in that**, in the location of the welding point, the strip is fixed in an interlocking manner in grooves (11, 12; 28, 29) in the mould halves (4, 5; 24, 25).

8. Method according to either Claim 1 or Claim 2, **characterized in that** the expandable sealing compound is used in the form of a pasty substance.

9. Method according to Claim 8, **characterized in that** the pasty substance is applied to the point of application thereof in the form of a bead.

10. Method according to Claim 9, **characterized in that**, in the location of the welding point, the pasty substance is injected into grooves (11, 12; 28, 29) in the mould halves (4, 5; 24, 25).

11. Method according to either Claim 1 or Claim 2, **characterized in that** the expandable sealing compound is used in the form of free-flowing granules.

12. Method according to any of Claims 1 to 11, **characterized in that** a substance consisting of a combination of exfoliated graphite and other mineral refractory materials is used as an expandable sealing compound.

13. Method according to any of Claims 1, 3 to 6, 8, 9, 10 and 11, **characterized in that** the expandable sealing compound is used reproducing a weld bead geometry.

## Revendications

1. Procédé pour sceller la cavité de coulée (8) d'un moule de coulée (6) en vue de la réalisation de soudures aluminothermiques de jonction de rails entre deux extrémités de rail (1, 2) avec deux demi-moules (4, 5) formant un moule de coulée ouvert par le dessus, reproduisant le profil du rail dans la zone de la soudure, les espaces existants entre les surfaces tournées vers l'intérieur des extrémités de rail (1, 2) et les sections de paroi adjacentes (9, 10) du moule de coulée (6) étant fermés par une masse d'étanchéité réfractaire, une coulée d'acier étant préparée dans un creuset de réaction et versée dans la cavité de coulée (8) pour réaliser la soudure configurée comme une soudure de jonction de rails, une masse intumescente expansible étant utilisée comme masse d'étanchéité, son expansion étant initiée thermiquement par une masse pyrotechnique, une masse réactive exothermique ou par un préchauffage du moule de coulée (6) avant le versement de la coulée d'acier, et la masse d'étanchéité étant reçue dans des rainures (11, 12) des demi-moules (4, 5), **caractérisé en ce que** les espaces entre les sections de paroi 9, 10 et les extrémités des rails 1, 2 sur les côtés intérieurs, c'est-à-dire sur les côtés tournés vers la cavité de coulée (8), sont formés de manière à être plus petits que ceux sur les côtés extérieurs, de sorte qu'une résistance à l'écoulement beaucoup plus grande se crée du côté intérieur par rapport au côté extérieur.

2. Procédé pour sceller la cavité de coulée (27) d'un moule de coulée (21) en vue de la réalisation de soudures de réparation aluminothermiques avec deux demi-moules (24, 25) formant un moule de coulée ouvert par le dessus, reproduisant un profil de rail (23) dans la zone de la soudure, les espaces existants entre les surfaces tournées vers l'intérieur du profil de rail (23) et les sections de paroi adjacentes du moule de coulée étant fermés par une masse d'étanchéité réfractaire, une coulée d'acier étant préparée dans un creuset de réaction et versée dans la cavité de coulée (27) pour réaliser la soudure configurée comme une soudure de réparation, une masse intumescente expansible étant utilisée comme masse d'étanchéité, son expansion étant initiée thermiquement par une masse pyrotechnique, une masse réactive exothermique ou par un préchauffage du moule de coulée (21) avant le versement de la coulée d'acier, et la masse d'étanchéité étant reçue dans des rainures (28, 29) des demi-moules (24, 25), **caractérisé en ce que** les espaces entre les sections de paroi du moule de coulée (21) et le profil du rail (23) sur les côtés intérieurs, c'est-à-dire les côtés tournés vers la cavité de coulée (27), sont formés de manière à être plus petits que ceux sur les côtés extérieurs, de sorte qu'une résistance à l'écoulement beaucoup plus grande se crée du côté intérieur par rapport au côté extérieur.

3. Procédé selon la revendication 1 ou 2, **caractérisé en ce que** la masse d'étanchéité est introduite dans les rainures (11, 12 ; 28, 29) des demi-moules (4, 5 ; 24, 25) au niveau du point de soudure respectif lors de l'assemblage des demi-moules.

4. Procédé selon la revendication 1, 2 ou 3, **caractérisé en ce que** la masse d'étanchéité expansible est utilisée sous forme de corps moulé.

5. Procédé selon la revendication 1, 2 ou 3, **caractérisé en ce que** la masse d'étanchéité expansible est utilisée sous forme de bande.

6. Procédé selon la revendication 5, **caractérisé en ce que** la bande est utilisée sous forme de bande adhésive, notamment de bande auto-adhésive.

7. Procédé selon la revendication 5 ou 6, **caractérisé en ce que** la bande est fixée de manière ajustée dans les rainures (11, 12 ; 28, 29) des demi-moules (4, 5 ; 24, 25) au niveau du site de la soudure.

8. Procédé selon la revendication 1 ou 2, **caractérisé en ce que** la masse d'étanchéité expansible est utilisée sous forme de pâte.

9. Procédé selon la revendication 8, **caractérisé en ce que** la pâte est appliquée en formant des cordons à son emplacement.

10. Procédé selon la revendication 9, **caractérisé en ce que** la pâte est injectée dans les rainures (11, 12 ; 28, 29) des demi-moules (4, 5 ; 24, 25) au niveau du site de la soudure.

11. Procédé selon la revendication 1 ou 2, **caractérisé en ce que** la masse d'étanchéité expansible est utilisée sous forme de granulat fluide.

12. Procédé selon l'une des revendications 1 à 11, **caractérisé en ce que** la masse d'étanchéité expansible est constituée d'une combinaison de graphite expansé et d'autres matériaux minéraux réfractaires.

13. Procédé selon l'une des revendications 1, 3 à 6, 8, 9, 10, 11, **caractérisé en ce que** la masse d'étanchéité expansible est utilisée pour reproduire une géométrie de cordon de soudure.
